# EUROPÄISCHE PATENTSCHRIFT

(11) **EP 1 648 683 B1**
(45) Veröffentlichungstag und Bekanntmachung des Hinweises auf die Patenterteilung: **24.01.2007**
(21) Anmeldenummer: 04769639.8
(22) Anmeldetag: 23.06.2004
(51) Int. Cl.: B29C 49/00, B29C 49/78

(54) **VORRICHTUNG ZUR HERSTELLUNG EINES DOPPELWANDIGEN THERMOPLASTISCHEN ROHRS MIT EINER ROHRMUFFE**
DEVICE FOR MANUFACTURING A DOUBLE-WALLED THERMOPLASTIC PIPE WITH A CONNECTING SLEEVE
DISPOSITIF DE FABRICATION D'UN TUYAU THERMOPLASTIQUE A DOUBLE PAROI AVEC UN MANCHON DE RACCORD

(30) Priorität: 31.07.2003 DE 10335518
(43) Veröffentlichungstag der Anmeldung: 26.04.2006
(73) Patentinhaber: Lupke, Manfred Arno Alfred, Thornhill Ontario L3T 1W6 (CA)
(72) Erfinder: LUPKE, Manfred, Arno, Alfred, Thornhill, Ontario L3T 1W6 (CA); LUPKE, Stefan, A., Thornhill, Ontario L3T 1X6 (CA)
(74) Vertreter: Otten, Hajo
(86) Internationale Anmeldenummer: PCT/IB2004/003361
(87) Internationale Veröffentlichungsnummer: WO 2005/009720

(56) Entgegenhaltungen:
- DE-A- 10 110 064
- FR-A- 2 718 509

## Beschreibung

Die Erfindung betrifft eine Vorrichtung zur Herstellung eines doppelwandigen thermoplastischen Rohrs mit einer Rohrmuffe.

Eine derartige Vorrichtung ist zum Beispiel aus der DE 101 10 064 A1 bekannt. Die Vorrichtung weist mehrere auf einer Bahn geführte Kokillen auf, die einen Formtunnel bilden, der in mindestens einem ersten Abschnitt eine gewellte Formwand und in mindestens einem zweiten Abschnitt eine der Rohrmuffe entsprechende Muffenausnehmung aufweist. Ein Spritzkopf der Vorrichtung weist eine erste Düse zur Extrusion eines ersten Schlauchs in den Formtunnel und eine in Bewegungsrichtung der Kokillen im Formtunnel nachgeordnete zweite Düse zur Extrusion eines zweiten Schlauchs auf. Zwischen den beiden Düsen ist ein erster Gaskanal angeordnet, der an einer ersten Druckgas-Steuereinrichtung zur Erzeugung eines Drucks p1 oder p2 in dem Raum zwischen den zwei Schläuchen durch das aus der Mündung des ersten Gaskanals austretende Druckgas angeschlossen ist. Ein zweiter Gaskanal, der in Bewegungsrichtung der Kokillen des Formtunnels hinter der zweiten Düse ausmündet, ist an einer zweiten Druckgas-Steuereinrichtung angeschlossen, um einen über Atmosphärendruck liegenden Druck p3 an der Innenseite des zweiten Schlauchs durch das aus der Mündung des zweiten Gaskanals austretende Druckgas zu erzeugen. Mittels einer Steuervorrichtung werden die beiden Druckgas-Steuereinrichtungen geregelt bzw. gesteuert.

Mit der Vorrichtung wird der erste Schlauch in den Formtunnel extrudiert. In dem ersten Abschnitt des Formtunnels wird der erste Schlauch in eine gewellte Form gebracht und in dem zweiten Abschnitt des Formtunnels zu der Rohrmuffe ausgeweitet. Der zweite Schlauch wird in den ersten Schlauch extrudiert und gegen die Wellentäler des ersten Schlauchs gedrückt, so dass ein Verbundrohr aus einem Außenschlauch und einem mit diesem verschweißten Innenschlauch gebildet wird. Während der erste Schlauch in die gewellte Form gebracht und der zweite Schlauch in den ersten extrudiert wird, wird der Raum zwischen den beiden Schläuchen mit einem atmosphärischen Druck liegenden Druck p1 beaufschlagt (Der Raum zwischen den zwei Schläuchen wird im folgenden mit Raum A bezeichnet). Der Druck p1 ist so bemessen, dass nach dem Abkühlen der an den Wellentälern miteinander verschweißten Schläuchen der Innenschlauch zwischen diesen Stellen nicht nach innen oder nach außen gewölbt ist. Nach dem Abkühlen der Schläuche soll sich dort Atmosphärendruck einstellen. Zudem sorgt der Druck p1 für die wellenförmige Ausbildung des ersten Schlauchs.

Soll der erste Schlauch in den zweiten Abschnitten zu der Rohrmuffe ausgeweitet werden, wird in dem Raum A der Druck p2 eingestellt. Der Druck p2 darf nicht zu gering sein, ansonsten würde sich der erste Schlauch nicht bzw. nicht ausreichend zur Rohrmuffe ausweiten. Ist der Druck p2 hingegen zu groß, wird der erste Schlauch beim Extrudieren gedehnt, so dass er am Anfang der Ausbildung der Rohrmuffe eine dünnere Wandstärke und am Ende der Rohrmuffe eine dickere Wandstärke aufweist.

Während des Extrudierens des zweiten Schlauchs in den zur Rohrmuffe ausgeweiteten ersten Schlauch wird der zweite Schlauch von innen mit einem Druck p3 über einen Atmosphärendruck beaufschlagt und gegen den ersten Schlauch gedrückt. Dadurch wird sichergestellt, dass eine vollflächige Verschweißung der beiden Schläuche im Bereich der Rohrmuffe erzielt wird.

Nachdem die Rohrmuffe durch beide Schläuche geformt wurde und der zweite Schlauch wieder gegen die Wellentäler des ersten Schlauchs in einem weiteren ersten Abschnitt desselben extrudiert wird, wird der Raum A wieder mit dem Druck p1 beaufschlagt.

Der Reglung bzw. der Steuerung der Drücke p1, p2 und p3 kommt eine besondere Bedeutung zu, da durch eine geeignete Einstellung der Drücke Auswölbungen des Innenschlauchs und/oder Unstetigkeiten bei der Wandstärke der Rohrmuffe weitestgehend vermieden werden kann. Bei der oben beschriebenen Vorrichtung erweist sich insbesondere die Regelung der Drücke p1 und p2 als schwierig, mit denen der Raum A beaufschlagt wird. Dieser Raum wird dabei durch den Spritzkopf und die zwei Schläuche begrenzt, wobei der erste Schlauch entweder an der gewellten Formwand oder an der Muffenausnehmung anliegen soll. Da der Durchmesser der Muffenausnehmung größer als der Durchmesser der gewellten Formwand ist, hängt das Volumen des Raums A von dem jeweiligen Verfahrensstadium ab. Somit ändert sich das Volumen zu Beginn und zu Ende der Herstellung der Rohrmuffe. Insbesondere bei großen Rohrdurchmessern beeinflussen die Volumenänderungen in dem Raum A die Drücke p1 und p2 in dem Maße, dass deren Einhaltung an die Druckregelung sehr hohe Anforderungen stellt.

Des weiteren beeinflusst auch die Temperatur in dem Raum A den dort herrschenden Druck. Die Temperatur hängt von den Wärmemengen ab, die dem Raum A zugeführt werden bzw. entzogen werden. Die Wärmemengen wiederum hängen von den Flächen des Raumes A ab, über die die Wärmemengen übertragen werden. Somit beeinflusst auch die unterschiedliche Form der Kokillen in dem ersten Abschnitt (wellenförmig) und zweiten Abschnitt den im Raum A herrschenden Druck.

Der Erfindung liegt daher die Aufgabe zugrunde, die Vorrichtung zur Herstellung eines doppelwandigen thermoplastischen Rohrs mit einer Rohrmuffe derart weiter zu entwickeln, dass in dem ersten Abschnitt des Formtunnels eine Auswölbung des Innenschlauchs beim Abkühlen der Schläuche vermieden wird und in dem zweiten Abschnitt des Formtunnels ein einwandfreies Ausweiten des ersten Schlauchs zu einer Rohrmuffe ermöglicht wird.

Die Aufgabe wird erfindungsgemäß durch die Merkmale des Anspruchs 1 gelöst. Dabei wird der Druckregler mit dem ersten Gaskanal durch eine Druckgasleitung verbunden, die mit einem zusätzlichen Druckgasreservoir in Austausch steht. Das Druckgasreservoir kann somit über die Druckgasleitung und über den ersten Gaskanal mit dem Raum A kommunizieren. Fällt beispielsweise aufgrund einer Volumenvergrößerung des Raums A der dortige Druck ab, kommt es sofort zu einem Druckausgleich zwischen Raum A und dem Druckgasreservoir, was den Druckabfall im Raum A dämpft. Dadurch können unerwünschte Druckgradienten in dem Raum A in einfacher Weise weitestgehend vermieden werden, die ansonsten von der Druckgas-Steuereinrichtung ausgeglichen werden müssten, was aber mit erheblichem Mehraufwand bei der Regelung verbunden wäre. Geregelt bzw. gesteuert wird erfindungsgemäß der Druck in einem Gesamtsystem, dessen Volumen sich im Wesentlichen aus dem Volumen des Raums A und dem Volumen des Druckgasreservoirs zusammensetzt. Dies führt zu einer Vergleichmäßigung des Druckverlaufs in dem Raum A, so dass insbesondere die unerwünschten Auswölbungen an der Innenwand des doppelwandigen Rohrs vermieden werden können.

In einem bevorzugten Ausführungsbeispiel ist das Druckgasreservoir als gesonderter Behälter ausgebildet. Somit kann für den Anschluss der Druckgas-Steuereinrichtung an den ersten Gaskanal eine Druckgasleitung mit gewöhnlichen Strömungsquerschnitten verwendet werden, wobei die Größe des Behälters das Maß der Dämpfung der Druckänderungen in dem Raum A bestimmt. Das zusätzliche Druckgasreservoir kann auch durch eine Ausweitung des Strömungsquerschnitts der Druckgasleitung wenigstens in Teilbereichen der Druckgasleitung gebildet werden.

Vorzugsweise ist der gesonderte Behälter durch eine T-förmige Muffe an der Druckgasleitung angeschlossen. Somit kann eine aus dem Stand bekannte Vorrichtung in einfacher Weise modifiziert werden, in dem die dortige Druckgasleitung getrennt wird und die T-förmige Muffe mit dem Druckgasbehälter eingesetzt wird.

Der Druckgasbehälter kann lösbar mit der T-Muffe verbunden sein. So kann beispielsweise in einer Erprobungsphase der Vorrichtung in einfacher Weise der Einfluss der Größe des gesonderten Behälters auf die Rohrwandqualität untersucht werden, um ein für das Verfahren optimales Behältervolumen zu ermitteln.

Der Druckgasbehälter kann zwei Zuleitungen umfassen und in Reihe mit der Druckgasleitung geschaltet sein. Auch ist es möglich, den Druckgasbehälter parallel zur Druckgasleitung zu schalten, das heißt, den Druckgasbehälter durch einen Bypass mit der Druckgasleitung zu verbinden.

In einem bevorzugten Ausführungsbeispiel ist das Druckgasreservoir in der Nähe des ersten Gaskanals angeordnet. Durch eine derartige Anordnung lassen sich die Strömungswiderstände zwischen Druckgasreservoir und Raum A minimieren, so dass ein schneller Druckausgleich zwischen Druckgasreservoir und dem Raum A stattfinden kann.

Vorzugsweise weist die Druckgas-Steuereinrichtung ein Manometer auf, dass stromaufwärts vom Druckgasreservoir angeordnet ist. Druckausgleiche zwischen dem Druckgasbehälter bzw. -reservoir und dem Raum A werden somit von dem Manometer nicht unmittelbar erfasst, sondern nur der Druck des Gesamtsystems, dessen Volumen, wie oben schon beschrieben, sich im Wesentlichen aus dem Volumen des Druckgasreservoirs und des Raums A zusammensetzt.

Zwischen der Druckgas-Steuereinrichtung und dem ersten Gaskanal kann ein Sicherheitsventil geschaltet sein. Vorzugsweise ist das Ventil als federbeaufschlagtes Ventil ausgebildet, dass bei einem bestimmten Druck schließt. Somit können unzulässige Überdrücke in der Raum A, beispielsweise bei einem Defekt der Druckgas-Steuereinrichtung, vermieden werden.

Der äußere Durchmesser der Formwand im ersten Abschnitt, der dem Rohrdurchmesser des herzustellenden Rohres entspricht, kann größer als 500 mm sein, vorzugsweise größer als 800 mm sein. Insbesondere bei großen Rohren hat es sich als zweckmäßig erwiesen, das erfindungsgemäße Druckgasreservoir zu verwenden. Mit größer werdendem Rohrdurchmesser steigt für den Raum A die Volumenabnahme beziehungsweise -zunahme, wenn von der Herstellung der Rohrmuffe auf die Herstellung der wellenförmigen Rohrwand übergegangen wird beziehungsweise von der Herstellung der wellenförmigen Rohrwand auf die Herstellung der Rohrmuffe übergegangen wird. Mit größer werdendem Rohrdurchmesser steigt auch die Abnahme beziehungsweise Zunahme der Wärmeübertragungsflächen des Raums A bei Übergang der Herstellung von Rohrmuffe und gewellter Wand.

In einem bevorzugten Ausführungsbeispiel ist das Volumen des Reservoirs größer als 10 Liter (Normliter). Vorzugsweise ist das Volumen größer als 20 Liter. Damit das zu regelnde System, bestehend aus Druckgasreservoir, Druckgasleitung, erstem Gaskanal und Raum A nicht zu träge wird, ist in einem bevorzugten Ausführungsbeispiel das Volumen des Druckgasreservoirs kleiner als 50 Liter. Vorzugsweise kann es auch kleiner als 40 Liter sein.

Alternativ oder zusätzlich kann die Druckgas-Steuereinrichtung zur Erzeugung des Drucks p3 an der Innenseite des zweiten Schlauchs einen Druckregler umfassen, der mit dem zweiten Gaskanal über eine Druckgasleitung verbunden ist, die mit einem zweiten, zusätzlichen Druckgasreservoir in Austausch steht.

Anhand eines in der Zeichnung dargestellten Ausführungsbeispiels wird die Erfindung näher erläutert. Es zeigen
- Fig. 1: einen Längsschnitt durch einen Teil eines Spritzkopfes der erfindungsgemäßen Vorrichtung vor der Herstellung einer Rohrmuffe,
- Fig.2: einen Längsschnitt durch einen Teil des Spritzkopfes und des Formtunnels während des Extrudierens des zweiten Schlauchs in den zur Rohrmuffe aufgeweiteten ersten Schlauch,
- Fig. 3: schematisch eine Steuerung der Drücke p1, p2 und p3
- Fig. 4: eine Ansicht der Druckgas-Steuereinrichtungen mit einem Druckgasreservoir.

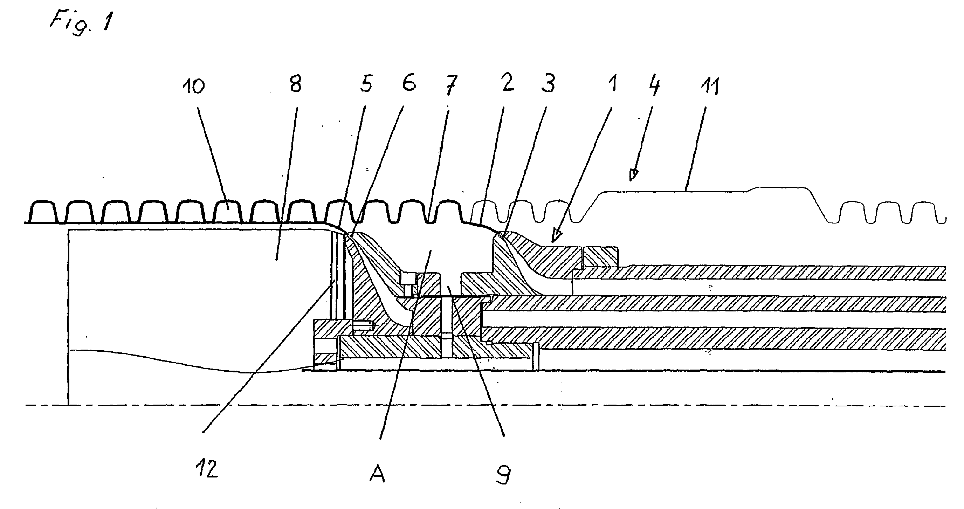

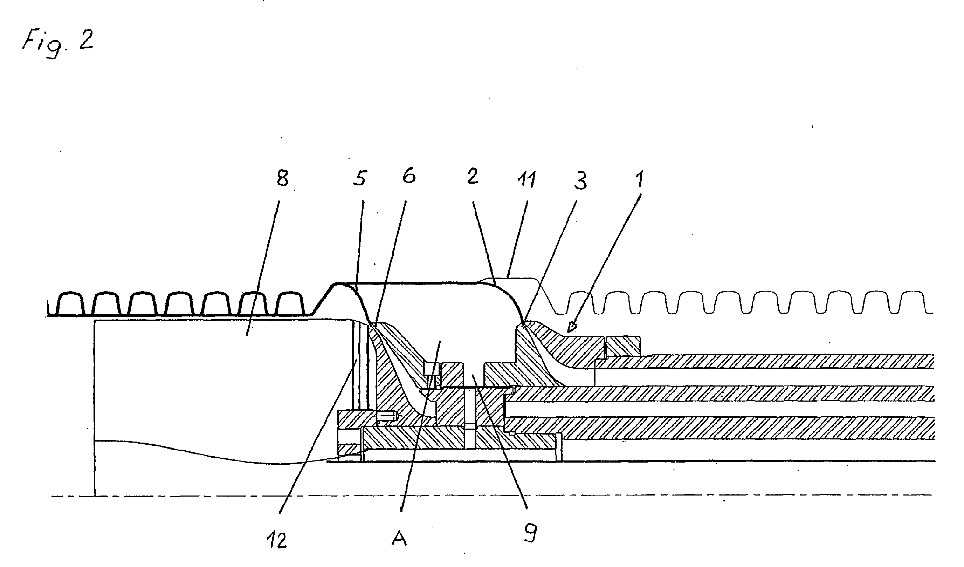

Die Figuren 1 und 2 zeigen einen Spritzkopf 1 der erfindungsgemäßen Vorrichtung in verschiedenen Verfahrensschritten. Bei dem in Figur 1 dargestellten Schritt wird ein erster Schlauch 2 durch eine erste Düse 3 des Spritzkopfs 1 in einen ersten Abschnitt des Formtunnels 4 extrudiert und in eine gewellte Form gebracht wird. Ein zweiter Schlauch 5 wird durch eine zweite Düse 6 des Spritzkopfes 1 in den ersten Schlauch 2 extrudiert und gegen Wellentäler 7 des ersten Schlauchs 2 gedrückt. In Produktionsrichtung hinter dem Spritzkopf 1 ist ein Kalibrierdorn 8 für den zweiten Schlauch 5 angeordnet.

Während der erste Schlauch 1 in die gewellte Form gebracht wird und der zweite Schlauch 5 gegen die Wellentäler 7 des ersten Schlauchs 2 gedrückt und mit diesen verschweißt wird, wird der Raum zwischen den beiden Schläuchen 2 und 5, Raum A, mit einem über Atmosphärendruck liegenden Druck p1 beaufschlagt. Der Druck wird durch ein Druckgas erzeugt, das aus einem zwischen den beiden Düsen 3 und 6 am Spritzkopf 1 angeordneten ersten Gaskanal 9 austritt.

Der Druck p1 ist so eingestellt, dass nach dem Abkühlen der beiden Schläuche 2 und 5 sich in den Zwischenräumen 10 zwischen den beiden Schläuchen Atmosphärendruck einstellt, so dass der zweite Schlauch an den Verbindungsstellen mit den Wellentälern 7 des ersten Schlauches 2 keine Auswölbungen aufweist. Zu beachten ist, dass bei dem in Figur 1 dargestellten Verfahrensschritt zur Aufrechterhaltung des Druckes p1 ständig Druckgas in den Raum A strömt, da die mit dem Druck p1 gefüllten Zwischenräume 10 dem Raum A Druckgas entziehen.

Figur 2 zeigt eine Verfahrenssituation, bei der die zweite Düse 6 des Spritzkopfes 1 eine Muffenausnehmung 11 des Formtunnels 4 bereits erreicht hat, während der erste Schlauch 2 noch in die Muffenausnehmung 11 extrudiert wird. Im Raum A zwischen den beiden Schläuchen 2 und 5 liegt nun ein im Wesentlichen konstanter Druck p2 an, der kleiner als p1 ist. Mit dem Druck p2 wird der erste Schlauch 2 vollflächig gegen die Muffenausnehmung 11 angedrückt.

Wie aus Figur 2 hervorgeht, ist der Druck p2 so eingestellt, dass der aus der ersten Düse 3 extrudierte erste Schlauch 2 zur Muffenausnehmung 11 angehoben, jedoch nicht soweit aufgebläht wird, dass eine zu starke Dehnung erfolgt, die zu einer geringen Wandstärke des Schlauchs 2 im Anfangs- und mittleren Bereich der Muffenausnehmung 11 und einem Aufstauen des thermoplastischen Materials und somit zu einer Vergrößerung der Wandstärke an dem von der Produktionsrichtung abgewandten Ende der Muffenausnehmung 11 führt.

Um den zweiten Schlauch 5 mit dem zur Rohrmuffe aufgeweiteten ersten Schlauch 1 effektiv zu verschmelzen, wird bei der in Figur 2 dargestellten Verfahrenssituation der zweite Schlauch 5 von innen über einen zweiten Gaskanal 12 mit einem Druck p3 über Atmosphärendruck beaufschlagt. Der Druck p3 ist derart eingestellt, dass ein optimales Verschmelzen des zweiten Schlauchs 5 mit dem ersten Schlauch 2 gewährleistet ist.

Beim Vergleich der Figuren 1 und 2 wird deutlich, dass das Volumen des Raumes A je nach Verfahrenschritt unterschiedlich groß ist und sich während des Verfahrens ändert. Auch ändern sich im Verlauf des Verfahrens die Größe der Flächen des Raumes A, über die Wärmemengen transportiert werden. Sowohl die Änderung des Volumens und als auch die Änderung der Größe der Wärmeübertragungsflächen haben Einfluss auf den Druck in der Kammer A. Die dadurch verursachten Druckänderungen werden jedoch durch das Druckpolster im erfindungsgemäßen Druckreservoirs gedämpft bzw. zum Teil ausgeglichen.

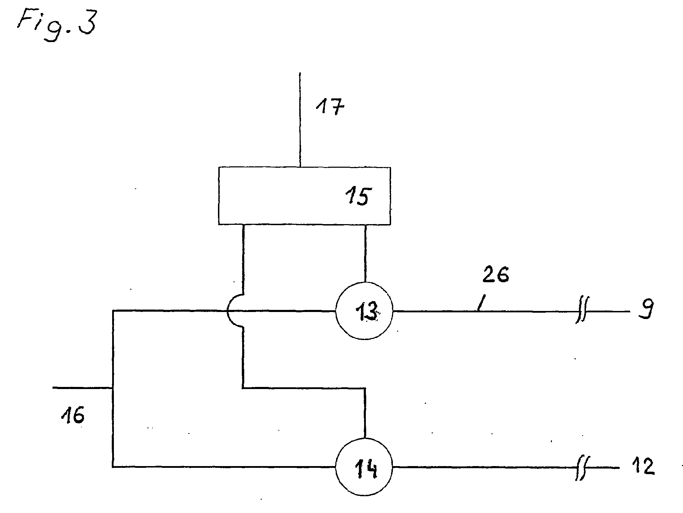

Figur 3 zeigt die Steuerung der Drücke p1, p2 und p3 durch an den ersten Gaskanal 9 und den zweiten Gaskanal 12 angeschlossene Druckgas-Steuereinrichtungen 13 bzw. 14 über eine Steuervorrichtung 15 zur zeitlichen Schaltung der Druckgas-Steuereinrichtungen 13 und 14.

Ein Druckgas zur Erzeugung der Drücke p1, p2 und p3 wird über eine Druckgas-Zuführung 16 den Druckgas-Steuereinrichtungen 13 und 14 zugeleitet. Die Druckgas-Steuereinrichtung 13 dient zur Erzeugung des Drucks p1 und des Drucks p2 durch das aus der Mündung des ersten Gaskanals 9 in den Raum A austretende Gas, während die Druckgas-Steuereinrichtung 14 zur Erzeugung des den zweiten Schlauch 5 von innen beaufschlagenden Drucks p3 durch das aus der Mündung des zweiten Gaskanals 12 austretende Druckgas vorgesehen ist. Eine Druckgasleitung 26 verbindet die Druckgas-Steuereinrichtung 13 mit dem ersten Gaskanal.

Die zeitliche Schaltung der Druckgas-Steuereinrichtungen 13 und 14 erfolgt durch die Steuervorrichtung 15. Über eine hier nicht weiter beschriebene Vorrichtung erhält die Steuervorrichtung 15 über eine Signalzuleitung 17 Signale, anhand derer die Drücke p1, p2 und p3 zeitlich veränderlich in Abhängigkeit der Position des Formtunnels relativ zum Spitzkopf einstellbar sind. So können die Druckgas-Steuereinrichtungen in Abhängigkeit der relativen Position des Formtunnels bestimmte Druckwerte für p1, p2 und p3 vorgeben.

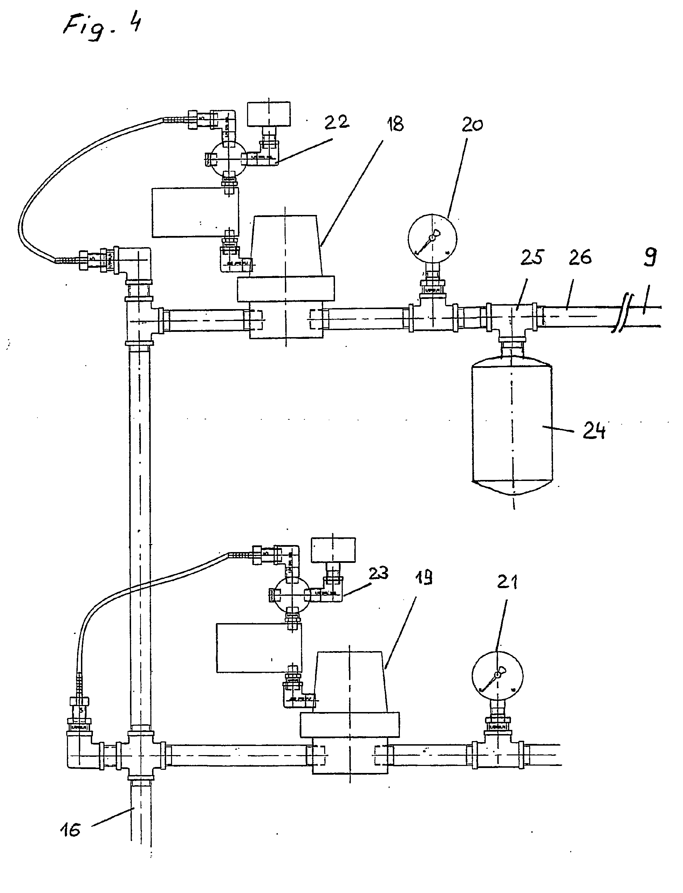

In Figur 4 ist ein Ausführungsbeispiel für die Druckgas-Steuereinrichtungen 13 und 14 zur zeitlichen Schaltung der Drücke p1 und p2 bzw. p3 dargestellt. Das zur Einstellung der Drücke p1, p2 und p3 benötigte Druckgas wird über die Druckgas-Zuführung 16 zugeleitet. Diese ist über Verzweigungen an Druckregler 18 und 19 angeschlossen. Stromabwärts hinter den Druckreglern 18 und 19 wird der aus diesen austretende Gasdruck durch Manometer 20 bzw. 21 gemessen und einer (im einzelnen in Figur 4 nicht dargestellten) Stelleinheit innerhalb der Druckregler 18 und 19 mitgeteilt. Da die Stelleinheiten, wie aus Figur 4 hervorgeht, mit Hilfe des von der Druckgas-Zuführung 16 bereitgestellten Druckgases, jedoch auf einem niedrigeren Druckwert betrieben werden, sind Druckminderer 23 bzw. 24 erforderlich.

Stromabwärts von Druckregler 18 und Manometer 20 ist ein Druckgasbehälter 24 angeordnet, der mit einer T-Muffe 25 an einer Druckgasleitung 26 angeschlossen ist. Die Druckgasleitung 26 verbindet den Druckregler 18 mit dem ersten Gaskanal 9.

Bei dem hier dargestellten Ausführungsbeispiel regelt die Druckgas-Steuereinrichtung mit dem Druckregler 18 den Druck in einem System, das die Druckgasleitung 26, den Behälter 24, den ersten Gaskanal 9 und den Raum A umfasst. In dem Druckgasbehälter 24 und in dem Raum A herrscht ein etwa gleichgroßer Druck, da sie miteinander ohne nennenswerte Strömungswiderstände miteinander kommunizieren können. Somit werden Druckänderungen in dem Raum A durch das Druckpolster im Druckgasbehälter gedämpft. Eine derartige Dämpfung erleichtert die geeignete Regelung der Drücke p1 und p2 und damit die Herstellung von doppelwandigen Rohren mit einer Rohrmuffe.

### Bezugszeichenliste

- 1: Spritzkopf
- 2: erster Schlauch
- 3: erste Düse
- 4: Formtunnel
- 5: zweiter Schlauch
- 6: zweite Düse
- 7: Wellentäler
- 8: Kalibrierdorn
- 9: erster Gaskanal
- 10: Zwischenraum
- 11: Muffenausnehmung
- 12: zweiter Gaskanal
- 13: Druckgas-Steuereinrichtung
- 14: Druckgas-Steuereinrichtung
- 15: Steuervorrichtung
- 16: Druckgas-Zuführung
- 17: Signalzuleitung
- 18: Druckregler
- 19: Druckregler
- 20: Manometer
- 21: Manometer
- 22: Druckminderer
- 23: Druckminderer
- 24: Druckgasbehälter
- 25: T-Muffe
- 26: Druckgasleitung
- A: Raum zwischen den Schläuchen 2 und 5

## Patentansprüche

1. Vorrichtung zur Herstellung eines doppelwandigen thermoplastischen Rohres mit einer Rohrmuffe, mit
A) einem aus mindestens einer Reihe auf einer Bahn geführter Kokillen gebildeten Formtunnel (4), der in mindestens einem ersten Abschnitt eine gewellte Formwand und in mindestens einem zweiten Abschnitt eine der Rohrmuffe entsprechende Muffenausnehmung (11) aufweist,
B) einer mit einem Spritzkopf (1) versehenen Extrusionseinrichtung, wobei der Spritzkopf (1) eine erste Düse (3) zur Extrusion eines ersten Schlauchs (2) in den Formtunnel (4) und eine in Bewegungsrichtung der Kokillen im Formtunnel (4) nachgeordnete zweite Düse (6) zur Extrusion eines zweiten Schlauchs (5) aufweist,
C) einem zwischen den beiden Düsen (3) und (6) angeordneten ersten Gaskanal (9), und einem in Bewegungsrichtung der Kokillen des Formtunnels (4) hinter der zweiten Düse (6) ausmündenden zweiten Gaskanal (12),
D) einer an den ersten Gaskanal (9) angeschlossenen Druckgas-Steuereinrichtung (13) zur Erzeugung eines Drucks p1 oder p2 in einem Raum (A) zwischen den zwei Schläuchen (2, 5) durch das aus der Mündung des ersten Gaskanals (9) austretende Druckgas, wobei die Druckgas-Steuereinrichtung (15) einen Druckregler (18) umfasst,
F) einer an den zweiten Gaskanal (12) angeschlossenen Druckgas-Steuereinrichtung (14) zur Erzeugung eines über Atmosphärendruck liegenden Drucks p3 an der Innenseite des zweiten Schlauchs (5) durch das aus der Mündung des zweiten Gaskanals (12) austretende Druckgas,
G) einer Steuervorrichtung (15) zur Steuerung der Druckgas-Steuereinrichtungen (13) und (14),
**dadurch gekennzeichnet, dass** der Druckregler (18) mit dem ersten Gaskanal (9) über eine Druckgasleitung (26) verbunden ist, die mit einem zusätzlichen Druckgasreservoir (24) in Austausch steht.

2. Vorrichtung nach Anspruch 1, **dadurch gekennzeichnet, dass** das Druckgasreservoir (24) als gesonderter Druckgasbehälter (24) ausgebildet ist.

3. Vorrichtung nach Anspruch 1, **dadurch gekennzeichnet, dass** das Druckgasreservoir (24) durch eine Ausweitung des Strömungsquerschnitts wenigstens in Teilbereichen der Druckgasleitung (26) ausgebildet wird.

4. Vorrichtung nach Anspruch 2, **dadurch gekennzeichnet, dass** der gesonderte Druckgasbehälter (24) durch eine T-förmigen Muffe (25) an der Druckgasleitung (26) angeschlossen ist.

5. Vorrichtung nach Anspruch 4, **dadurch gekennzeichnet, dass** der Druckgasbehälter (24) lösbar mit der T-förmigen Muffe (25) verbunden ist.

6. Vorrichtung nach Anspruch 2, **dadurch gekennzeichnet, dass** der Druckgasbehälter (24) zwei Zuleitungen umfasst und in Reihe mit der Druckgasleitung (26) geschaltet ist.

7. Vorrichtung nach Anspruch 2, **dadurch gekennzeichnet, dass** der Druckgasbehälter (24) zwei Zuleitungen umfasst und parallel zur Druckgasleitung (26) geschaltet ist.

8. Vorrichtung nach einem der Ansprüche 1 bis 7, **dadurch gekennzeichnet, dass** das Druckgasreservoir (24) in der Nähe des ersten Gaskanals (9) angeordnet ist.

9. Vorrichtung nach einem der Ansprüche 1 bis 8, **dadurch gekennzeichnet, dass** die Druckgassteuerung (13) ein Manometer (20) aufweist, das stromaufwärts vom Druckgasreservoir (24) angeordnet ist.

10. Vorrichtung nach einem der Ansprüche 1 bis 9, **dadurch gekennzeichnet, dass** zwischen der Druckgas-Steuerungseinrichtung (13) und dem ersten Gaskanal (9) ein Sicherheitsventil geschaltet ist.

11. Vorrichtung nach einem der Ansprüche 1 bis 10, **dadurch gekennzeichnet, dass** der äußere Durchmesser der Formwand (4) im ersten Abschnitt größer als 500 mm ist, vorzugsweise größer als 800 mm ist.

12. Vorrichtung nach einem der Ansprüche 1 bis 11, **dadurch gekennzeichnet, dass** das Volumen des Druckgasreservoirs (24) größer als 10 Liter ist, vorzugsweise größer als 20 Liter ist.

13. Vorrichtung nach Anspruch eine der Ansprüche 1 bis 12, **dadurch gekennzeichnet, dass** das Volumen des Druckgasreservoirs (24) kleiner als 60 Liter ist, vorzugsweise kleiner als 50 Liter ist.

14. Vorrichtung nach Anspruch eine der Ansprüche 1 bis 13,
**dadurch gekennzeichnet, dass** die Druckgas-Steuereinrichtung (14) einen Druckregler (19) umfasst, wobei der Druckregler (19) mit dem zweiten Gaskanal (12) über eine Druckgasleitung verbunden ist, die mit einem zweiten, zusätzlichen Druckgasreservoir in Austausch steht.

## Claims

1. A device for manufacturing a double-walled thermoplastic pipe with a connecting sleeve, comprising
A) a molding tunnel (4), which is formed by at least a succession of molds guided on a path, and which has in at least a first portion a corrugated molding wall and in at least a second portion a sleeve recess (11) corresponding to the connecting sleeve,
B) an extrusion device provided with an extrusion head (1), the extrusion head (1) having a first die (3) for the extrusion of a first flexible tube (2) into the molding tunnel (4) and a second die (6), arranged downstream in the direction of movement of the molds in the molding tunnel (4), for the extrusion of a second flexible tube (5),
C) a first gas channel (9), arranged between the two dies (3) and (6), and a second gas channel (12), opening out downstream of the second die (6) in the direction of movement of the molds of the molding tunnel (4),
D) a compressed-gas control device (13), connected to the first gas channel (9), for generating a pressure p1 or p2 in a space (A) between the two flexible tubes (2, 5) by the compressed gas emerging from the mouth of the first gas channel (9), the compressed-gas control device (15) comprising a pressure controller (18),
E) a compressed-gas control device (14), connected to the second gas channel (12), for generating a pressure p3 lying above atmospheric pressure on the inner side of the second flexible tube (5) by the compressed gas emerging from the mouth of the second gas channel (12),
F) a control device (15) for controlling the compressed-gas control devices (13) and (14),
**characterized in that** the pressure controller (18) is connected to the first gas channel (9) via a compressed-gas line (26), which is connected to an additional compressed-gas reservoir (24) for gas exchange.

2. The device as claimed in claim 1, **characterized in that** the compressed-gas reservoir (24) is formed as a separate compressed-gas vessel (24).

3. The device as claimed in claim 1, **characterized in that** the compressed-gas reservoir (24) is formed by an extension of the flow cross section at least in partial regions of the compressed-gas line (26).

4. The device as claimed in claim 2, **characterized in that** the separate compressed-gas vessel (24) is connected to the compressed-gas line (26) by a T-shaped sleeve (25).

5. The device as claimed in claim 4, **characterized in that** the compressed-gas vessel (24) is releasably connected to the T-shaped sleeve (25).

6. The device as claimed in claim 2, **characterized in that** the compressed-gas vessel (24) comprises two supply lines and is connected in series with the compressed-gas line (26).

7. The device as claimed in claim 2, **characterized in that** the compressed-gas vessel (24) comprises two supply lines and is connected in parallel with the compressed-gas line (26).

8. The device as claimed in anyone of claims 1 to 7, **characterized in that** the compressed-gas reservoir (24) is arranged in the vicinity of the first gas channel (9).

9. The device as claimed in anyone of claims 1 to 8, **characterized in that** the compressed-gas control (13) has a pressure gage (20), which is arranged upstream of the compressed-gas reservoir (24).

10. The device as claimed in anyone of claims 1 to 9, **characterized in that** a safety valve is connected between the compressed-gas control device (13) and the first gas channel (9).

11. The device as claimed in anyone of claims 1 to 10, **characterized in that** the outer diameter of the molding wall (4) in the first portion is greater than 500 mm, preferably greater than 800 mm.

12. The device as claimed in anyone of claims 1 to 11, **characterized in that** the volume of the compressed-gas reservoir (24) is greater than 10 liters, preferably greater than 20 liters.

13. The device as claimed in anyone of claims of 1 to 12, **characterized in that** the volume of the compressed-gas reservoir (24) is less than 60 liters, preferably less than 50 liters.

14. The device as claimed in anyone of claims 1 to 13, **characterized in that** the compressed-gas control device (14) comprises a pressure controller (19), the pressure controller (19) being connected to the second gas channel (12) via a compressed-gas line which is connected to a second, additional compressed-gas reservoir for gas exchange.

## Revendications

1. Dispositif de fabrication d'un tuyau thermoplastique à double paroi avec un manchon de raccord, avec
A) un tunnel de moulage (4) formé d'au moins une série de lingotières guidées sur une voie, lequel comprend dans au moins une première partie une paroi de moulage ondulée et dans au moins une seconde partie un creux de manchon (11) correspondant au manchon de raccord,
B) une installation d'extrusion dotée d'une tête d'injection (1), la tête d'injection (1) comprenant une première buse (3) pour l'extrusion d'un premier tuyau (2) dans le tunnel de moulage (4) et une seconde buse (6) disposée en aval dans le sens de déplacement des lingotières dans le tunnel de moulage (4) pour l'extrusion d'un second tuyau (5),
C) un premier canal de gaz (9) disposé entre les deux buses (3) et (6) et un second canal de gaz (12) débouchant à l'arrière de la seconde buse (6) dans le sens de déplacement des lingotières du tunnel de moulage (4),
D) une installation de commande de gaz comprimé (13) raccordée au premier canal de gaz (9) pour produire une pression p1 ou p2 dans un espace (A) entre les deux tuyaux (2, 5) par le gaz comprimé sortant de l'ouverture du premier canal de gaz (9), l'installation de commande de gaz comprimé (15) comprenant un régulateur de pression (18),
F) une installation de commande de gaz comprimé (14) raccordée au second canal de gaz (12) pour produire une pression p3 supérieure à la pression atmosphérique sur la face interne du second tuyau (5) par le gaz comprimé sortant de l'ouverture du second canal de gaz (12),
G) un dispositif de commande (15) pour commander les installations de commande de gaz comprimé (13) et (14),
**caractérisé en ce que** le régulateur de pression (18) est relié au premier canal de gaz (9) via une canalisation de gaz comprimé (26) qui se trouve en échange avec un réservoir de gaz comprimé (24) supplémentaire.

2. Dispositif selon la revendication 1, **caractérisé en ce que** le réservoir de gaz comprimé (24) est configuré comme un récipient de gaz comprimé (24) séparé.

3. Dispositif selon la revendication 1, **caractérisé en ce que** le réservoir de gaz comprimé (24) est formé par un élargissement de la section d'écoulement au moins dans des zones partielles de la canalisation de gaz comprimé (26).

4. Dispositif selon la revendication 2, **caractérisé en ce que** le récipient de gaz comprimé (24) séparé est raccordé par un manchon (25) en forme de T à la canalisation de gaz comprimé (26).

5. Dispositif selon la revendication 4, **caractérisé en ce que** le récipient de gaz comprimé (24) est relié de façon détachable au manchon en forme de T (25).

6. Dispositif selon la revendication 2, **caractérisé en ce que** le récipient de gaz comprimé (24) comprend deux conduites d'amenée, et est monté en série avec la canalisation de gaz comprimé (26).

7. Dispositif selon la revendication 2, **caractérisé en ce que** le récipient de gaz comprimé (24) comprend deux conduites d'amenée, et est monté en parallèle à la canalisation de gaz comprimé (26).

8. Dispositif selon l'une des revendications 1 à 7, **caractérisé en ce que** le réservoir de gaz comprimé (24) est disposé à proximité du premier canal de gaz (9).

9. Dispositif selon l'une des revendications 1 à 8, **caractérisé en ce que** la commande de gaz comprimé (13) comprend un manomètre (20) qui est disposé en amont du réservoir de gaz comprimé (24).

10. Dispositif selon l'une des revendications 1 à 9, **caractérisé en ce qu'**une soupape de sûreté est commutée entre l'installation de commande de gaz comprimé (13) et le premier canal de gaz (9).

11. Dispositif selon l'une des revendications 1 à 10, **caractérisé en ce que** le diamètre externe de la paroi de moulage (4) dans la première partie est supérieur à 500 mm, de préférence supérieur à 800 mm.

12. Dispositif selon l'une des revendications 1 à 11, **caractérisé en ce que** le volume du réservoir de gaz comprimé (24) est supérieur à 10 litres, de préférence supérieur à 20 litres.

13. Dispositif selon l'une des revendications 1 à 12, **caractérisé en ce que** le volume du réservoir de gaz comprimé (24) est inférieur à 60 litres, de préférence inférieur à 50 litres.

14. Dispositif selon l'une des revendications 1 à 13, **caractérisé en ce que** l'installation de commande de gaz comprimé (14) comprend un régulateur de pression (19), le régulateur de pression (19) étant relié au second canal de gaz (12) via une canalisation de gaz comprimé, qui se trouve en échange avec un second réservoir de gaz comprimé supplémentaire.
